# EUROPÄISCHE PATENTSCHRIFT

(11) **EP 1 844 658 B1**
(45) Veröffentlichungstag und Bekanntmachung des Hinweises auf die Patenterteilung: **04.05.2011**
(21) Anmeldenummer: 07005874.8
(22) Anmeldetag: 22.03.2007
(51) Int. Cl.: A21C 15/00, A21D 15/00

(54) **Vakuumiervorrichtung für Backgut und Verfahren zum Kalibrieren einer Saugleistung einer Unterdruckquelle im Rahmen eines Vakuumiervorgangs unter Verwendung einer derartigen Vakuumiervorrichtung**
Vacuuming device for bakery products and method for calibrating the suction performance of a low pressure source within a vacuuming process while using such a vacuuming device
Dispositif à vide pour produits de boulangerie et procédé destiné au calibrage d'une puissance d'aspiration d'une source sous pression dans le cadre d'un processus de mise sous vide en utilisant un tel dispositif

(30) Priorität: 13.04.2006 DE 102006017457
(43) Veröffentlichungstag der Anmeldung: 17.10.2007
(73) Patentinhaber: Werner & Pfleiderer Lebensmitteltechnik GmbH, 91550 Dinkelsbühl (DE)
(72) Erfinder: Gloss, Franz, 91564 Neuendettelsau (DE); Schabert, Michael, 86343 Königsbrunn (DE)
(74) Vertreter: Hofmann, Matthias

(56) Entgegenhaltungen:
- EP-A- 0 343 905
- EP-A- 1 279 600
- DE-A1- 2 902 270
- DE-A1- 10 318 761
- DE-C1- 4 219 465
- US-A- 2 041 056
- US-A- 2 072 737
- US-A- 4 326 384
- US-A- 5 946 919

## Beschreibung

Die Erfindung betrifft eine Vakuumiervorrichtung für Backgut mit einer Vakuumkammer und mit einer mit dieser in Fluidverbindung stehenden Unterdruckquelle. Ferner betrifft die Erfindung ein Verfahren zum Kalibrieren einer Saugleistung einer Unterdruckquelle im Rahmen eines Vakuumiervorgangs für einen bestimmten Typ von Backgut unter Verwendung einer derartigen Vakuumiervorrichtung. Die Erfindung betrifft weiterhin eine Vakuumiervorrichtung mit einem Vakuumierprogramm, welches auf eine Kalibriertabelle zugreift, die durch ein derartiges Kalibrierverfahren gewonnen wurde.

Eine Vakuumiervorrichtung für Backgut mit einer Vakuumkammer und mit einer mit dieser in Fluidverbindung stehenden Unterdruckquelle ist durch offenkundige Vorbenutzung bekannt. Derartige Vakuumiervorrichtungen kommen für frisch gebackenes Backgut zum Einsatz. Beim Vakuumieren kühlt das Backgut durch die entstehende Verdunstungskälte ab. Unmittelbar nach dem Backen vakuumiertes Backgut bleibt im Vergleich zu unvakuumiert abkühlendem Backgut länger frisch, wie sich gezeigt hat. Empfindliches Backgut, z. B. Roggenbrot, neigt beim Absaugen der Vakuumkammer allerdings zum Reißen.

Die DE 29 02 270 A 1 offenbart eine Vakuumiervorrichtung für Backgut mit einer Vakuumkammer und einer hieran angeschlossenen Unterdruckquelle. Zur Messung des Kammerdrucks in der Vakuumkammer dient ein Drucksensor, der außerhalb der Vakuumkammer angeordnet ist. Bei einer ersten Ausführungsform wird der Kammer-Unterdruck anhand des Messwerts des Drucksensors geregelt heruntergefahren. Bei einer anderen Ausführung wird der Unterdruck über eine in ein Brot direkt eingeführte Sonde zur Vorgabe von Steuerwerten für das einzustellende Vakuum gemessen.

Bei einer dritten Ausführung wird die Druckänderung in einem Brot gemessen.

Es ist eine Aufgabe der vorliegenden Erfindung, eine Vakuumiervorrichtung der eingangs genannten Art derart weiterzubilden, dass auch beim Vakuumieren von empfindlichem Backgut ein effizientes Absaugen der Vakuumkammer möglich ist, ohne die Qualität des Backguts zu beeinträchtigen.

Diese Aufgabe ist erfindungsgemäß gelöst durch eine Vakuumiervorrichtung mit den im Anspruch 1 angegebenen Merkmalen.

Erfindungsgemäß wurde erkannt, dass das Reißen des Backguts beim Absaugen darauf zurückzuführen ist, dass sich aufgrund der Hautbildung am Backgut der Innendruck von diesem nicht genauso schnell abbauen kann, wie der Kammerdruck in der sonstigen Vakuumkammer. Es wurde erkannt, dass empfindliches Backgut reißt, sobald der Druckunterschied zwischen dem Backgut-Innendruck und dem sonstigen Kammerdruck zu groß wird. Durch die beiden erfindungsgemäßen Drucksensoren kann der Druckunterschied zwischen dem Innern des Backguts und der sonstigen Vakuumkammer gemessen werden, so dass ein zu hoher Druckunterschied vermieden werden kann. Es kann daher effizient abgesaugt werden, ohne dass zu große Vorsicht walten muss, was beim Stand der Technik zu einer nachteilig langen Prozessdauer führt. Die Regeleinrichtung erlaubt einen automatisierten Absaugprozess, wodurch eine optimierte Absauggeschwindigkeit gewährleistet ist, ohne dass Qualitätseinbußen durch Backgutrisse zu befürchten sind.

Drucksensoren nach Anspruch 2 sind Standardkomponenten und führen daher zu keinem hohen Kostenaufwand.

Drucksensoren nach Anspruch 3 ermöglichen den Einsatz der erfindungsgemäßen Differenzdruckmessung, ohne dass größere bauliche Änderungen an der Vakuumkammer erforderlich sind.

Eine Messdurchführung nach Anspruch 4 erfordert nur eine Bohrung in einer Wand der Vakuumkammer.

Eine Anordnung der Messdurchführungen nach Anspruch 5 ist besonders elegant.

Ein flexibler Messleitungsabschnitt nach Anspruch 6 erlaubt es, die Sonde nach Wunsch in ein vorgegebenes Stück Backgut einzuführen.

Ein Druckregelventil nach Anspruch 7 ermöglicht es, die Unterdruckquelle mit gleichbleibender nomineller Leistung zu betreiben, wobei die Saugleistung ausschließlich über das Druckregelventil eingestellt wird.

Eine weitere Aufgabe der Erfindung ist es, ein Kalibrierverfahren anzugeben, bei dem eine erfindungsgemäße Vakuumiervorrichtung eingesetzt wird.

Diese Aufgabe ist erfindungsgemäß gelöst durch ein Kalibrierverfahren mit den Merkmalen des Anspruchs 8.

Die Vorteile des Kalibierverfahrens entsprechen denjenigen, die vorstehend schon unter Bezugnahme auf die erfindungsgemäße Vakuumiervorrichtung diskutiert wurden. Nach vollendeter Kalibrierung muss bei späteren Vakuumiervorgängen nicht jedes Mal neu gemessen werden, da die zeitlichen Druckverläufe im Innern des gleichen Typs Backguts bei sich verringerndem Vakuumkammer-Innendruck im Wesentlichen reproduzierbar sind.

Eine Kalibriertabelle nach Anspruch 11 ist einfach.

Die eingangs erwähnte Aufgabe wird zudem gelöst durch eine Vakuumiervorrichtung mit den im Anspruch 12 angegebenen Merkmalen.

Eine Vakuumiervorrichtung nach Anspruch 12 muss über keine Druckmesseinrichtung mehr verfügen, da sie die vorher schon über das Kalibrierverfahren bestimmten Saugleistungswerte verwenden kann.

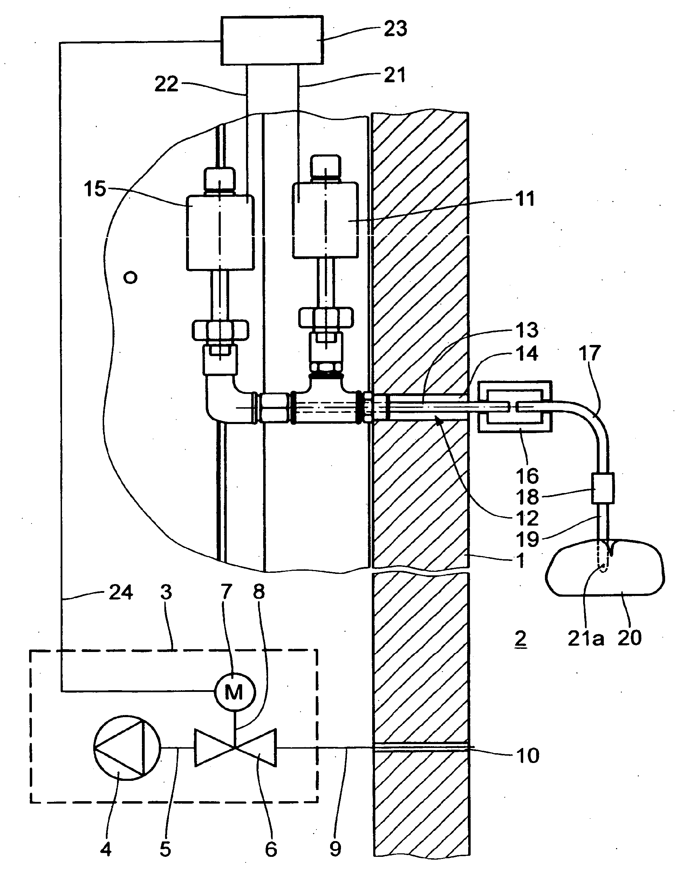

Ein Ausführungsbeispiel der Erfindung wird nachfolgend anhand der Zeichnung näher erläutert. Die einzige Figur zeigt schematisch einen Ausschnitt einer Vakuumiervorrichtung im Bereich einer im Schnitt dargestellten Wand einer Vakuumkammer am Ort einer Druckmesseinrichtung.

Eine nur im Bereich eines kleinen Ausschnitts einer im Schnitt dargestellten Vakuumkammerwand 1 dargestellte Vakuumiervorrichtung hat eine Vakuumkammer 2. Mit der Vakuumkammer 2 in Fluidverbindung steht eine insgesamt mit 3 bezeichnete Unterdruckquelle. Letztere hat eine Vakuumpumpe 4, die über einen Saugleitungsabschnitt 5 mit einem Druckregelventil 6 in Fluidverbindung steht. Das Druckregelventil 6 hat eine in bekannter Weise mittels eines Aktuators 7 veränderbare Minimalweite. Zur Veränderung der Minimalweite steht der Aktuator 7 mit dem Druckregelventil 6 in Wirkverbindung, wie in der Figur durch eine Leitung 8 angedeutet. Die Vakuumpumpe 4, das Druckregelventil 6 sowie der Aktuator 7 sind Bestandteile der Unterdruckquelle 3.

Über einen weiteren Saugleitungsabschnitt 9 steht das Druckregelventil 6 mit dem Innern der Vakuumkammer 2 in Fluidverbindung. Hierzu weist die Vakuumkammerwand 1 eine Saugleitungsdurchführung 10 auf. Im Bereich von dieser ist eine Außenwand des weiteren Saugleitungsabschnitts 9 gegen die Vakuumkammerwand 1 fluiddicht abgedichtet.

Die Vakuumiervorrichtung hat einen ersten Drucksensor 11 zur Messung des Kammerdrucks in der Vakuumkammer 2. Der erste Drucksensor 11 steht über eine Messdurchführung 12 mit dem Innern der Vakuumkammer 2 in Fluidverbindung. Die Messdurchführung 12 weist zwei gegeneinander abgedichtete Messleitungen auf, nämlich eine innere Messleitung 13 und eine diese außen umgebende und koaxial zu dieser angeordnete äußere Messleitung 14. Die Innenlumen der Messleitungen 13, 14 sind gegeneinander abgedichtet. Die äußere Messleitung 14 steht mit dem ersten Drucksensor 11 in Fluidverbindung und mündet frei ins Innere der Vakuumkammer 2 aus, so dass der Druck, der mit dem ersten Drucksensor 11 gemessen wird, ein Maß für den freien Kammerdruck in der Vakuumkammer 2 darstellt.

Die innere Messleitung 13 steht mit einem zweiten Drucksensor 15 in Fluidverbindung, der genauso wie der erste Drucksensor 11 außerhalb der Vakuumkammer 2 angeordnet ist. Die innere Messleitung 13 ist so weit durch die Messdurchführung 12 hindurchgeführt, dass sie ins Innere der Vakuumkammer 2 übersteht. Dieses überstehende Ende der inneren Messleitung 13 steht über eine druckdichte Kupplung 16 mit einem flexiblen Messleitungsabschnitt 17 in Fluidverbindung. Letzterer steht über eine weitere Kupplung 18 mit einer hohlen Messsonde 19 in Fluidverbindung. Die Messsonde 19 ist aus Edelstahl.

Der flexible Messleitungsabschnitt 17 ist aus einem für Lebensmittelanwendungen geeigneten Kunststoff, z. B. aus Polyethylen (PE) oder aus PTFE.

In der dargestellten Messposition ist ein freies Ende der Messsonde 19 in ein Stück Backgut 20 eingeführt. Eine Öffnung 21 a am freien Ende der Messsonde 19 kommuniziert dabei mit dem Innern des Backguts 20. Über die Komponenten 13, 16, 17, 18 und 19 steht daher der zweite Drucksensor 15 mit dem Innern des Backguts 20 in Fluidverbindung, so dass der vom zweiten Drucksensor 15 gemessene Wert ein Maß für den Backgut-Innendruck darstellt.

Die beiden Drucksensoren 11, 15 stehen über zugeordnete Signalleitungen 21, 22 mit einer Regeleinrichtung 23 zur Regelung der Saugleistung der Unterdruckquelle 3 in Verbindung. Die Regeleinrichtung 23 steht wiederum über eine Signalleitung 24 mit dem Aktuator 7 in Verbindung.

Bei einer alternativen, nicht dargestellten Ausführung der Druckmesseinrichtung entfällt die Messdurchführung 12. Die beiden Drucksensoren sind bei dieser alternativen Ausführung innerhalb der Vakuumkammer angeordnet und stehen über eine drahtlose Signalverbindung, z. B. über eine Funkverbindung, mit der Regeleinrichtung 23 in Signalverbindung.

Ein Kalibrieren der Saugleistung der Unterdruckquelle 3 im Rahmen des Vakuumierens frisch gebackenen Backguts 20 eines bestimmten Typs, z. B. Roggenbrot, unter Verwendung der vorstehend beschriebenen Vakuumiervorrichtung geschieht folgendermaßen: Zunächst wird die Messsonde 19 in das Backgut 20 eingeführt. Anschließend wird das Absaugen der Vakuumkammer 2 mit der Unterdruckquelle 3 mit einer vorgegebenen maximalen Saugleistung gestartet. Die Druckwerte beider Drucksensoren 11, 15 werden während des Absaugens fortdauernd gemessen. Ebenfalls fortdauernd werden die von den Drucksensoren 11, 15 gemessenen Druckwerte zur Bestimmung eines Druckunterschieds verglichen. Sobald der Druckunterschied einen vorgegebenen Unterschieds-Toleranzwert überschreitet wird die Saugleistung mittels der Regeleinrichtung 23 reduziert. Ein Beispiel für einen derartigen Unterschieds-Toleranzwert ist für Roggenbrot 70 mbar. Dieser Unterschied ergibt sich dadurch, dass das Backgut 20 eine geschlossene Haut bildet, so dass das Innere des Backguts, wenn auch unvollkommen, gegen die sonstige Vakuumkammer 2 abgedichtet ist. Beim Absaugen der Vakuumkammer 2 kommt es hierbei zu einem Druckunterschied dergestalt, dass der Innendruck im Backgut 20 größer ist als der Kammerdruck in der sonstigen Vakuumkammer 2. Die Saugleistung wird durch Verengen des Druckregelventils 6 durch entsprechendes Ansteuern des Aktuators 7 mit der Regeleinrichtung 23 reduziert. Aufgrund dieser Reduktion verlangsamt sich die Druckverringerung in der Vakuumkammer 2, so dass der Backgut-Innendruck dieser Druckverringerung besser folgen kann. Es kommt in der Folge zu einer Reduzierung des Druckunterschieds zwischen dem Backgut-Innendruck und dem Kammerdruck in der sonstigen Vakuumkammer 2. Entsprechend dieser Reduzierung kann die Absaugleistung, angesteuert durch die Regeleinrichtung 23, durch entsprechendes Erweitern des Druckregelventils 6 über den Aktuator 7, wieder gesteigert werden. Die Druckmessungen mit den beiden Drucksensoren 11, 15 werden während des gesamten Absaugvorgangs fortgesetzt. In bestimmten Zeitabständen nach dem Starten des Absaugens werden die jeweils gemessenen Saugleistungswerte zur Erstellung einer Kalibriertabelle gespeichert. In letzterer sind die Saugleistungswerte über die Zeit für den bestimmten Backguttyp, im vorliegenden Ausführungsbeispiel also für Roggenbrot, abgelegt. Die in der Kalibriertabelle abgelegten Saugleistungswerte entsprechen der jeweiligen momentanen Weite des Druckregelventils 6.

Nach dem Abschluss des Kalibrierverfahrens kann die Kalibriertabelle im Vakuumierprogramm der Vakuumiervorrichtung abgelegt werden. Diese kann dann zum Vakuumieren des kalibrierten Backguttyps, im vorliegenden Ausführungsbeispiel zum Vakuumieren von Roggenbrot, mit dem so kalibrierten Vakuumierprogramm betrieben werden. Beim Absaugen ist dann gewährleistet, dass der vorgegebene Differenzdruck nicht überschritten wird, so dass ein Reißen der Brotkruste aufgrund eines zu hohen Druckunterschieds vermieden ist.

## Patentansprüche

1. Vakuumiervorrichtung für Backgut
- mit einer Vakuumkammer (2),
- mit einer Unterdruckquelle (3), die mit der Vakuumkammer (2) in Fluidverbindung steht,
mit
- einem ersten Drucksensor (11) zur Messung des Kammerdrucks in der Vakuumkammer (2),
- einen zweiten Drucksensor (15) mit einer in das Backgut (20) zur Messung des Backgut-Innendrucks einführbaren Messsonde (19)
- einer Regeleinrichtung (23) zur Regelung der Saugleistung der Unterdruckquelle (3), wobei die Regeleinrichtung (23) mit beiden Drucksensoren (11, 15) und der Unterdruckquelle (3) in Signalverbindung steht und derart arbeitet, dass die Saugleistung reduziert wird, sobald der von beiden Drucksensoren (11, 15) gemessene Druckunterschied einen vorgegebenen Unterschieds-Toleranzwert überschreitet.

2. Vakuumiervorrichtung nach Anspruch 1, **dadurch gekennzeichnet, dass** beide Drucksensoren (11, 15) außerhalb der Vakuumkammer (2) angeordnet sind und über mindestens eine Messdurchführung (12) mit dem Innern der Vakuumkammer (2) in Fluidverbindung stehen.

3. Vakuumiervorrichtung nach Anspruch 1, **dadurch gekennzeichnet, dass** beide Drucksensoren (11, 15) innerhalb der Vakuumkammer (2) angeordnet sind und über eine drahtlose Signalverbindung mit dem Äußeren der Vakuumkammer (2) in Signalverbindung stehen.

4. Vakuumiervorrichtung nach Anspruch 2, **gekennzeichnet durch** genau eine Messdurchführung (12) für beide Drucksensoren (11, 15), wobei die Messdurchführung (12) zwei gegeneinander abgedichtete Messleitungen (13, 14) aufweist, wobei jede Messleitung (13, 14) einem der beiden Drucksensoren (11, 15) zugeordnet ist.

5. Vakuumiervorrichtung nach Anspruch 4, **dadurch gekennzeichnet, dass** die beiden Messleitungen (13, 14) im Bereich der Messdurchführung (12) koaxial zueinander angeordnet sind.

6. Vakuumiervorrichtung nach einem der Ansprüche 1 bis 5, **dadurch gekennzeichnet, dass** die Messsonde (19) mit einer Sensoreinheit des zweiten Drucksensors (15) über einen flexiblen Messleitungsabschnitt (17) in Verbindung steht.

7. Vakuumiervorrichtung nach einem der Ansprüche 1 bis 6, **dadurch gekennzeichnet, dass** die Unterdruckquelle (3) ein Druckregelventil (6) aufweist, über welches die Unterdruckquelle (3) mit der Vakuumkammer (2) verbunden ist, wobei die Regeleinrichtung (23) mit einem Aktuator (7) zur Veränderung der Weite eines Durchlasses des Druckregelventils (6) in Signalverbindung steht.

8. Verfahren zum Kalibrieren einer Saugleistung der Unterdruckquelle (3) im Rahmen eines Vakuumiervorgangs für einen bestimmten Typ von Backgut (20) unter Verwendung einer Vakuumiervorrichtung nach einem der Ansprüche 1 bis 7 mit folgenden Verfahrensschritten:
- Einführen der Messsonde (19) in ein Stück Backgut (20) in der Vakuumkammer (2);
- Starten des Absaugens der Vakuumkammer (2) mit der Unterdruckquelle (3) mit einer vorgegebenen maximalen Saugleistung;
- fortdauerndes Messen der Druckwerte beider Drucksensoren (11, 15) während des Absaugens;
- Vergleichen der gemessenen Druckwerte zur Bestimmung eines Druckunterschieds;
- Reduzieren der Saugleistung, sobald der Druckunterschied einen vorgegebenen Unterschieds-Toleranzwert überschreitet;
- Fortsetzen der Druckmessungen während des Absaugens.

9. Verfahren nach Anspruch 8 mit folgendem ergänzenden Schritt:
- Speichern von in bestimmten Zeitabständen nach dem Starten des Absaugens gemessenen Saugleistungswerten zur Erstellung einer Kalibriertabelle, in der die Saugleistungswerte über die Zeit für den bestimmten Backguttyp abgelegt sind.

10. Verfahren nach Anspruch 8 oder 9 unter Verwendung einer Vakuumiervorrichtung, bei der die Unterdruckquelle eine Vakuumpumpe (4) mit einem Druckregelventil (6) aufweist, **dadurch gekennzeichnet, dass**
- die Saugleistung durch Verengen des Druckregelventils (6) zwischen der Vakuumpumpe (4) und der Vakuumkammer (2) reduziert wird.

11. Verfahren nach Anspruch 9 und 10, **dadurch gekennzeichnet, dass** in der Kalibriertabelle Saugleistungswerte abgelegt werden, die der jeweiligen momentanen Weite des Druckregelventils (6) entsprechen.

12. Vakuumiervorrichtung mit einem Vakuumierprogramm, welches auf eine Kalibriertabelle zugreift, die durch ein Kalibrierverfahren nach einem der Ansprüche 8 bis 11 gewonnen wurde.

## Claims

1. Vacuuming device for bakery products, the vacuuming device comprising
- a vacuum chamber (2);
- a low pressure source (3) which is in fluid connection with the vacuum chamber (2), the low pressure source (3) comprising
- a first pressure sensor (11) for measuring the chamber pressure in the vacuum chamber (2);
- a second pressure sensor (15) comprising a measuring probe (19) which is insertable into the bakery product (20) for measuring the internal pressure of the bakery product;
- a control device (23) for controlling the suction power of the low pressure source (3), with the control device (23) being in signal connection with both pressure sensors (11, 15) and the low pressure source (3) and working in such a way that the suction power is reduced as soon as the pressure difference measured by both pressure sensors (11, 15) exceeds a predetermined difference tolerance value.

2. Vacuuming device according to claim 1, **characterized in that** both pressure sensors (11, 15) are arranged outside the vacuum chamber (2) and are in fluid connection with the inside of the vacuum chamber (2) via at least one measurement feedthrough (12).

3. Vacuuming device according to claim 1, **characterized in that** both pressure sensors (11, 15) are arranged inside the vacuum chamber (2) and are in signal connection with the outside of the vacuum chamber (2) via a wireless signal connection.

4. Vacuuming device according to claim 2, **characterized by** exactly one measurement feedthrough (12) for both pressure sensors (11, 15), with the measurement feedthrough (12) comprising two measuring lines (13, 14) which are sealed relative to each other, with each measuring line (13, 14) being assigned to one of the two pressure sensors (11, 15).

5. Vacuuming device according to claim 4, **characterized in that** the two measuring lines (13, 14) are arranged coaxially to each other in the region of the measurement feedthrough (12).

6. Vacuuming device according to one of claim 1 to 5, **characterized in that** the measuring probe (19) is in connection with a sensor unit of the second pressure sensor (15) via a flexible measuring line portion (17).

7. Vacuuming device according to one of claims 1 to 6, **characterized in that** the low pressure source (3) comprises a pressure control valve (6) via which the low pressure source (3) is connected with the vacuum chamber (2), with the control device (23) being in signal connection with an actuator (7) for changing the width of a passage of the pressure control valve (6).

8. Method for calibrating a suction power of the low pressure source (3) within a vacuuming process for a particular type of bakery products (20) while using a vacuuming device according to one of claims 1 to 7, the method comprising the following method steps:
- inserting the measuring probe (19) into a piece of bakery product (20) in the vacuum chamber (2);
- starting to exhaust the vacuum chamber (2) using the low pressure source (3) at a predetermined maximum suction power;
- continuously measuring the pressure values of both pressure sensors (11, 15) during exhaustion;
- comparing the measured pressure values for determining a pressure difference;
- reducing the suction power as soon as the pressure difference exceeds a predetermined difference tolerance value;
- continuing the pressure measurements during exhaustion.

9. Method according to claim 8 comprising the following additional step:
- storing suction power values measured in particular intervals after exhaustion has started in order to compile a calibration table where the suction power values over time are stored for the particular type of bakery product.

10. Method according to claim 8 or 9 while using a vacuuming device where the low pressure source comprises a vacuum pump (4) with a pressure control valve (6), **characterized in that**
- the suction power is reduced by reducing the width of the pressure control valve (6) between the vacuum pump (4) and the vacuum chamber (2).

11. Method according to claim 9 and 10, **characterized in that** suction power values are stored in the calibration table which correspond to the respective momentary width of the pressure control valve (6).

12. Vacuuming device comprising a vacuuming program which has access to a calibration table which was obtained using a calibration method according to one of claims 8 to 11.

## Revendications

1. Dispositif à vide pour produits de boulangerie comportant
- une chambre à vide (2),
- une source de dépression (3) qui se trouve en liaison fluidique avec la chambre à vide (2),
- un premier capteur de pression (11) servant à mesurer la pression dans la chambre à vide (2),
- un second capteur de pression (15) doté d'une sonde de mesure (19) pouvant être introduite dans les produits de boulangerie (20) pour la mesure de la pression interne des produits de boulangerie,
- un dispositif de régulation (23) pour la régulation de la puissance d'aspiration de la source de dépression (3), le dispositif de régulation (23) se trouvant en liaison de signal avec les deux capteurs de pression (11, 15) et la source de dépression (3) et fonctionnant de telle manière que la puissance d'aspiration soit réduite dès que la pression différentielle mesurée par les deux capteurs de pression (11, 15) dépasse une valeur de tolérance différentielle prescrite.

2. Dispositif à vide selon la revendication 1, **caractérisé en ce que** les deux capteurs de pression (11, 15) sont disposés en dehors de la chambre à vide (2) et se trouvent en liaison fluidique par au moins un passage d'instrumentation (12) avec l'intérieur de la chambre à vide (2).

3. Dispositif à vide selon la revendication 1, **caractérisé en ce que** les deux capteurs de pression (11, 15) sont disposés dans la chambre à vide (2) et se trouvent en liaison de signal par une liaison de signal sans fil avec l'extérieur de la chambre à vide (2).

4. Dispositif à vide selon la revendication 2, **caractérisé par** précisément un passage d'instrumentation (12) pour les deux capteurs de pression (11, 15), le passage d'instrumentation (12) présentant deux câbles pour la mesure (13, 14) étanches l'un par rapport à l'autre, chaque câble pour la mesure (13, 14) étant associé à l'un des deux capteurs de pression (11, 15).

5. Dispositif à vide selon la revendication 4, **caractérisé en ce que** les deux câbles pour la mesure (13, 14) sont disposés coaxialement l'un par rapport à l'autre dans la zone du passage d'instrumentation (12).

6. Dispositif à vide selon l'une quelconque des revendications 1 à 5, **caractérisé en ce que** la sonde de mesure (19) se trouve en liaison avec une unité de détection du second capteur de pression (15) par le biais d'une section flexible de câble pour la mesure (17).

7. Dispositif à vide selon l'une quelconque des revendications 1 à 6, **caractérisé en ce que** la source de dépression (3) présente un régulateur de pression (6) qui relie la source de dépression (3) à la chambre à vide (2), le dispositif de régulation (23) se trouvant en liaison de signal avec un actionneur (7) pour la modification du diamètre d'un passage du régulateur de pression (6).

8. Procédé d'étalonnage d'une puissance d'aspiration de la source de dépression (3) dans le cadre d'un processus de mise sous vide pour un certain type de produits de boulangerie (20) en utilisant un dispositif à vide selon l'une quelconque des revendications 1 à 7, comportant les étapes de procédé suivantes :
- introduction de la sonde de mesure (19) dans un produit de boulangerie (20) dans la chambre à vide (2) ;
- lancement de l'aspiration de la chambre à vide (2) avec la source de dépression (3) à une puissance d'aspiration maximale prescrite ;
- mesure continuelle des valeurs de pression des deux capteurs de pression (11, 15) pendant l'aspiration ;
- comparaison des valeurs de pression mesurées pour la détermination d'une pression différentielle ;
- réduction de la puissance d'aspiration dès que la pression différentielle dépasse une valeur de tolérance différentielle prescrite ;
- poursuite des mesures de pression pendant l'aspiration.

9. Procédé selon la revendication 8 comportant l'étape complémentaire suivante :
- enregistrement des valeurs de puissance d'aspiration mesurées à intervalles déterminés après le lancement de l'aspiration pour l'établissement d'un tableau d'étalonnage, dans lequel les valeurs de puissance d'aspiration sont enregistrées sur la durée pour le type déterminé de produits de boulangerie.

10. Procédé selon la revendication 8 ou 9 utilisant un dispositif à vide, pour lequel la source de dépression présente une pompe à vide (4) avec un régulateur de débit (6), **caractérisé en ce que**
- la puissance d'aspiration est réduite par le rétrécissement du régulateur de pression (6) entre la pompe à vide (4) et la chambre à vide (2).

11. Procédé selon les revendications 9 et 10, **caractérisé en ce que** des valeurs de puissance d'aspiration qui correspondent au diamètre momentané respectif du régulateur de pression (6) sont enregistrées dans le tableau d'étalonnage.

12. Dispositif à vide doté d'un programme à vide accédant à un tableau d'étalonnage qui a été obtenu par un procédé d'étalonnage selon l'une quelconque des revendications 8 à 11.
